# EUROPEAN PATENT SPECIFICATION

(11) **EP 2 378 889 B1**
(45) Date of publication and mention of the grant of the patent: **26.12.2012**
(21) Application number: 10700070.5
(22) Date of filing: 12.01.2010
(51) Int. Cl.: A22C 29/02

(54) **APPARATUS AND METHOD FOR MECHANIZED PEELING OF SHRIMP**
VORRICHTUNG UND VERFAHREN ZUR MECHANISIERTEN SCHALENTFERNUNG BEI GARNELEN
APPAREIL ET PROCÉDÉ POUR LE DÉCORTICAGE MÉCANISÉ DE CREVETTES

(30) Priority: 13.01.2009 NL 2002413
(43) Date of publication of application: 26.10.2011
(73) Proprietor: Kant, Albert, 9934 EG Delfzijl (NL)
(72) Inventor: Kant, Albert, 9934 EG Delfzijl (NL)
(74) Representative: Jansen, Cornelis Marinus
(86) International application number: PCT/NL2010/050013
(87) International publication number: WO 2010/082819

(56) References cited:
- EP-A- 0 743 010
- FR-A- 1 536 270
- US-A- 2 988 771

## Description

The invention relates to an apparatus for mechanized peeling of shrimp according to the preamble of claim 1. The invention furthermore relates to a method for mechanized peeling of shrimp according to the preamble of claim 10.

Such an apparatus and such a method are known from EP0743010A1.

A drawback of this known apparatus and method is, that for the thus treated shrimp there still is a small fraction of shrimp for which the armature and the meat of the shrimp have not been fully separated from one another. For this small shrimp fraction, such uncomplete separation often occurs at the tail portions of the shrimp.

It is an object of the invention to overcome this drawback.

To this end, according to the invention, there is provided an apparatus according to claim 1, as well as a method according to claim 10.

Hence, according to the invention it is provided that, at least during the exertion of the pressing force, one or each of the first and the second contacting means, at least when seen in at least one cross-section transverse to the squeezing direction, has a recessed shape on its side facing towards the shrimp, wherein at least a part of that recessed shape embeds the shrimp at least during the exertion of said pressing force. Thanks to this embedding, there arises, during the pressing, an increase of contacting areas between the first and the second contacting means, on the one hand, and the armature of the shrimp, on the other hand. This increase of contacting areas not only results into higher friction between the contacting means and the armature of the shrimp, but also into a more evenly distributed pressing force on the shrimp. The combination of said higher friction and said more even force distribution leads to improved separation of armature and meat.

For achieving the said favourable shrimp embedding, such a recessed shape, whether or not being realized by such deforming means, may in principle occur in the first contacting means or in the second contacting means or both in the first contacting means and in the second contacting means.

Specific embodiments of the invention are set forth in the dependent claims.

In a preferable embodiment, the apparatus comprises the said deforming means, the first contacting means comprise a first endless conveyor belt and the second contacting means comprise a second endless conveyor belt, which conveyor belts are arranged for successively feeding the shrimps through the peeling zone in a transport direction that intersects the squeezing direction, with the shrimps lying and being retained inbetween trajectories, facing towards one another, of the respective conveyor belts.

Preferably, the squeezing means comprise at least one squeezing element situated in the peeling zone at a side of one or each of the first and/or the second conveyor belt facing away from the intervening area between the trajectories facing towards one another, for the exertion, via the first and/or the second conveyor belt, of said pressing force onto the shrimp lying in said intervening area by means of pressing with a pressing area of the squeezing element against the moving first and/or second conveyor belt.

More preferably, for realizing of said pressing force moving in the squeezing direction, the pressing area of the at least one squeezing element has, on a side from which the shrimp are fed, a bordering edge of which at least a part is inclined relative to both the squeezing direction and the transport direction.

Yet more preferably, said deforming means comprise at least one deforming element which is adapted for moveably pressing against the first and/or the second conveyor belt for realizing of said deformation state.

Yet more preferably, the at least one deforming element is adapted for resiliently pressing against the first and/or the second conveyor belt.

In a further preferable embodiment of all abovementioned embodiments, the apparatus further comprises at least one cutting station for providing, prior to the exertion of said pressing force, an incision in the back of a shrimp to be peeled.

In a yet further preferable embodiment of all abovementioned embodiments, the apparatus further comprises positioning means which, prior to the exertion of said pressing force, position the shrimp to be peeled onto the first contacting means in such manner that the backs of the shrimp lie along a longitudinal edge of the first contacting means.

In a yet further preferable embodiment of all abovementioned embodiments, the first contacting means and/or the second contacting means are adapted for making friction-increasing contact with the shrimp.

The invention will now be further elucidated by means of, nonlimiting, examples referring to the schematic figures in the enclosed drawing, in which:
Fig. 1A shows, in a perspective view, an example of an embodiment of an apparatus according to the invention;
Fig. 1B shows the example of Fig. 1A in a side view;
Fig. 2A shows, in a perspective view, an example of another embodiment of an apparatus according to the invention;
Fig. 2B shows the example of Fig. 2A in a side view;
Fig. 3A shows, in a sectional side view, an example of yet another embodiment of an apparatus according to the invention; and
Fig. 3B shows the example of Fig. 3A in a top view onto a trajectory of a second conveyor belt of the concerned apparatus.

In the different embodiments of these different Figures, sometimes use has been made of like reference signs to indicate like parts and like aspects of the different embodiments.

In the different embodiments of these different Figures, there is shown a (cooked) shrimp 2 which is curved according to a substantially horseshoe-shape with a head 3 and a tail 4 at the respective free ends of the horseshoe-shape, with a back 5 facing away from the head and the tail, and with an underside and an opposing topside each extending along the horseshoe-shape. It is known from EP0743010A1 that if on such a shrimp 2 a pressure force is exerted shifting from the head 3 and the tail 4 in the direction of the back 5, the meat 7 of the shrimp 2 can be squeezed outwards through the rings of the armature 6 (also called "shell") without the meat being crushed or flattened. Moreover, it has appeared that this technique is suitable for shrimp of all types and dimensions.

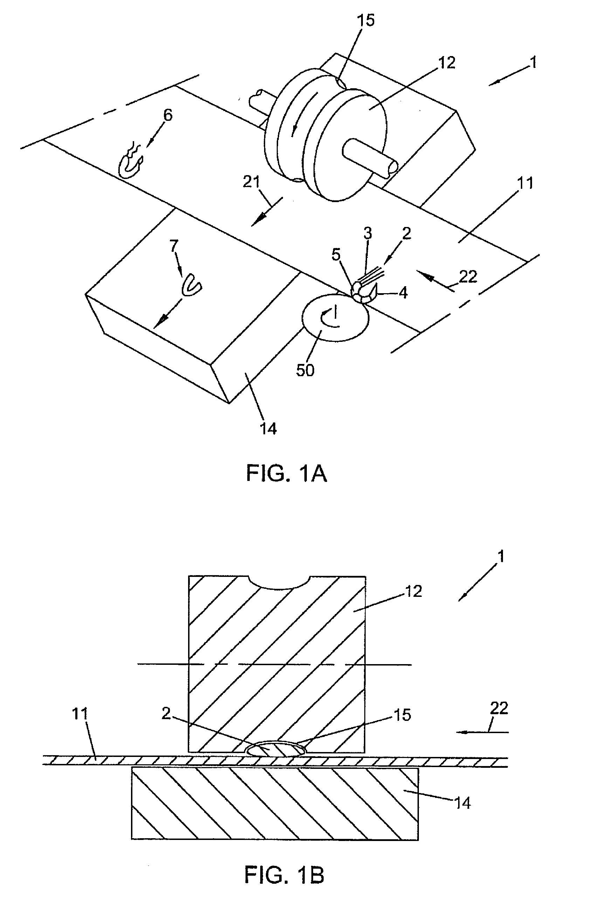

Reference is first made to the apparatus 1 shown in Figs. 1A and 1B. The apparatus 1 comprises an endless conveyor belt 11 via which the shrimp 2 to be peeled are fed in a transport direction 22 to the shown peeling zone of the apparatus. The shrimp 2 have their backs 5 lying adjacent the longitudinal edge of the belt 11. In principle, the shrimp can be placed in the desired position on the belt by hand, yet, preferably, the shrimp are placed in the proper position mechanically by means of automatic positioning means. Examples of such positioning means are known from EP0743010A1.

At least in the peeling zone the conveyor belt 11 is supported by a supporting member 14. When a shrimp 2 is located in the peeling zone, a roller 12 is moved towards the shrimp in order to squeeze the meat 7 from the armature 6 in the above-described manner. Next, the roller 12 is withdrawn again. When it leaves the peeling zone, the peeled shrimp is released from its shell 6. The shell 6 remains lying on the belt 11. The meat 7 falls from the belt and is received by means not further shown for being further processed. The further processing may for instance include rinsing the peeled shrimp and sieving them, and packing in amounts of a predetermined weight.

As known from EP0743010A1, the conveyor belt 11 can for instance consist of or be provided with emery cloth, fitted with the rough side outwards. The roller 12 can likewise be provided with emery cloth. Other friction-increasing means or surfaces can be used as well. It is also possible to provide a strip of supple material between the roller 12 and the shrimp 2, via which strip the roller 12 presses on the shrimp. In that case, that strip of material may have its side facing the shrimp 2 provided with a friction-increasing surface.

Depending on the speed of travel of the conveyor belt 11 and the speed at which the press member can be reciprocated to peel a shrimp, the conveyor belt can, if necessary, be stopped each time during the peeling operations.

At least for particular types of shrimp, an improved peeling result can be obtained if, prior to the peeling operation, the shrimp are incised on their backsides with a cut extending transversely to the rings of the armature 6. The chance that parts of the armature 6 stick to the meat 7 is then smaller. In Fig. 1A a rotating cutting member 50 is shown schematically and by way of example, which cutting member can for instance be a small circular saw, disposed next to the conveyor belt 11 in a plane extending substantially parallel to the top face of the conveyor belt and capable of providing the shrimp, on the backsides thereof, with an incision. A slightly oblique position of the cutting member is also possible.

As follows from the above, the apparatus 1 comprises first contacting means (in the form of the belt 11) for contacting the underside of the shrimp, second contacting means (in the form of a surface of the roller 12) for contacting the topside of the shrimp, and squeezing means (in the form of the roller 12 and the supporting member 14) for realizing that via the first contacting means and the second contacting means there is exerted in a peeling zone of the apparatus 1 a pressing force onto a shrimp thus being situated inbetween the first and the second contacting means, which pressing force moves in a squeezing direction 21 extending from the head 3 and the tail 4, both situated on one end of the curved shrimp, towards the back 5, so that the armature 6 of the shrimp opens on the backside and the meat 7 of the shrimp is squeezed out of the armature.

In the shown example, the roller 12, at least when seen in at least one cross-section transverse to said squeezing direction 21, has a recessed shape 15 on its side facing towards the shrimp 2 for embedding, with at least a part of that recessed shape 15, the shrimp at least during the exertion of said pressing force. Said embedding is shown in Fig. 1B.

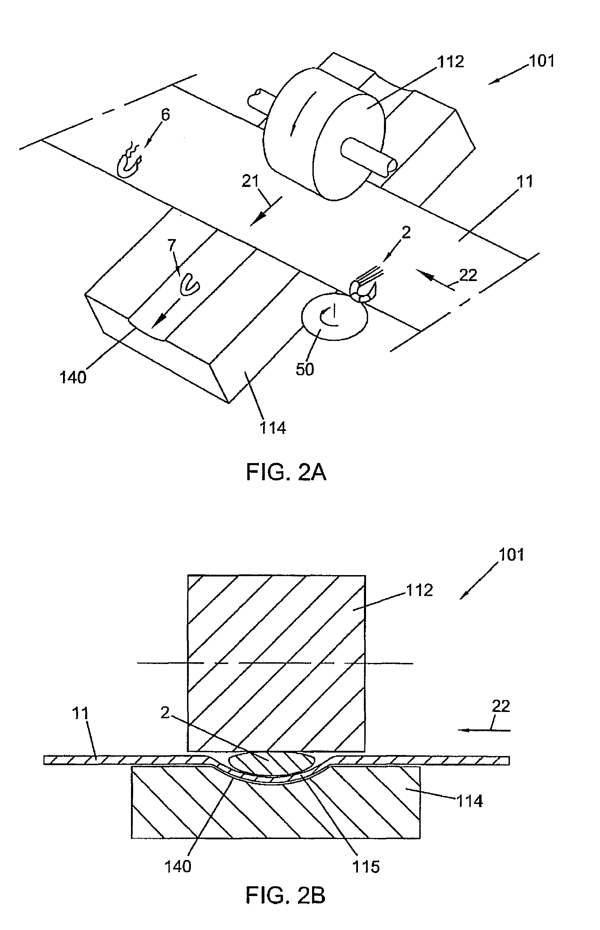

Reference is now made to the apparatus 101 shown in Figs. 2A and 2B. In many respects, the apparatus 101 is similar to the above-described apparatus 1 of Figs. 1A and 1B.

A difference between the two apparatus is that the roller of apparatus 101, now indicated by reference numeral 112, does not have the recessed shape 15 of the roller 12 of apparatus 1. Instead, the apparatus 101 comprises deforming means for bringing the belt 11 in a deformation state in which a recessed shape 115 of the mentioned kind occurs. This deformation state occurs at least during the exertion of said pressing force. In the shown example, said deforming means are formed by a recess 140 of the supporting member 114 of apparatus 101. As shown in Fig. 2B, at least a part of the recessed shape 115 embeds the shrimp 2 at least during the exertion of said pressing force.

In the examples of Figs. 1A, 1B, 2A and 2B, the squeezing means comprise a movable roller 12 or 112 which, rolling relative to a supporting surface 14 or 114, can be moved towards the shrimp 2. However, the squeezing means may also comprise an element designed differently than a roller, for instance an element in the form of a roller segment or another bent surface with or without a varying curvature radius.

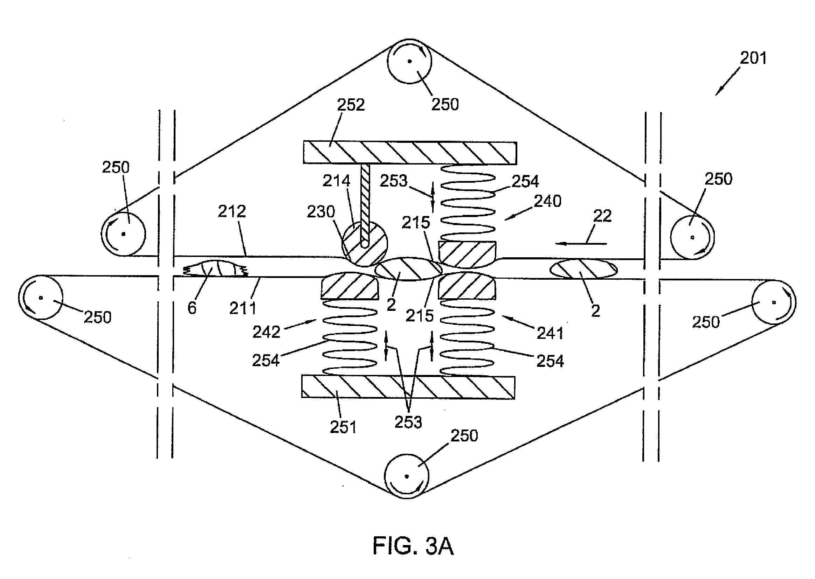

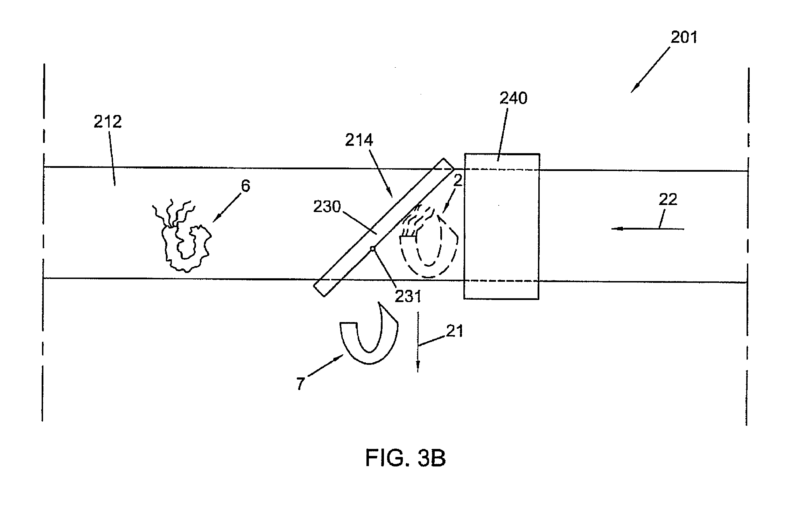

Reference is now made to the apparatus 201 shown in Figs. 3A and 3B.

The first contacting means of apparatus 201 comprise a first endless conveyor belt 211 and the second contacting means of apparatus 201 comprise a second endless conveyor belt 212. The first conveyor belt 211 can for instance consist of emery cloth passed over return pulleys 250, at least one of which pulleys, in operation, is driven. The second conveyor belt 212 is arranged above the conveyor belt 211 and can also consist of emery cloth or another suitable material passed over return pulleys 250, one of which, in operation, is driven. The bottom path of the upper conveyor belt 212 lies directly above the top path of the lower conveyor belt 211 and has the same transport direction 22 as the top path of the lower conveyor belt. In the example shown, the lower conveyor belt 211 is longer than the upper conveyor belt 212, so that the lower conveyor belt has, at a feed side thereof, a starting section not yet overhung by the upper conveyor belt 212. The starting section offers the possibility of placing the shrimp to be peeled in the desired position on the lower conveyor belt 211.

The conveyor belts 211, 212 are arranged for successively feeding the shrimp 2 through the peeling zone in the transport direction 22 that intersects the squeezing direction 21 (see Fig. 3B), with the shrimps 2 lying and being retained inbetween trajectories, facing towards one another, of the respective conveyor belts 211, 212.

The squeezing means of apparatus 201 comprise a squeezing element 214 situated in the peeling zone at a side of the second conveyor belt 212 facing away from the intervening area between the trajectories facing towards one another, for the exertion, via the second conveyor belt, of said pressing force onto the shrimp 2 lying in said intervening area. The exertion of said pressing force is realized by means of pressing with a pressing area 230 of the squeezing element 214 against the moving second conveyor belt 212. For that purpose, the squeezing element 214 is situated at a fixed position relative to the positions of the return pulleys 250 of the second conveyor belt 212. Such fixed positioning of the squeezing element 214 is schematically indicated in Fig. 3A in that the squeezing element 214 is fixedly positioned relative to some reference structure 252 which is situated at a fixed position relative to the positions of the return pulleys 250 of the second conveyor belt 212.

It can be seen in Fig. 3B that, for realizing of said pressing force moving in the squeezing direction 21, the pressing area 230 of the squeezing element 214 has, on a side from which the shrimp 2 are fed, a bordering edge 231 of which at least a part is inclined relative to both the squeezing direction 21 and the transport direction 22. The application of such a squeezing element with such a pressing area having such inclined bordering edge is a simple way of realizing said moving pressing force, thus avoiding more complicated driving mechanisms for moving rollers back and forth, such as the rollers 12 and 112 shown in Figs. 1 and 2.

The apparatus 201 comprises deforming means for bringing the first and the second conveyor belts in a deformation state in which a recessed shape 215 (see Fig. 3A) occurs. This deformation state occurs at least during the exertion of said pressing force. In the shown example, said deforming means comprise deforming elements 240, 241, 242 which are adapted for moveably pressing against the first and the second conveyor belt 211, 212. Said moveability is indicated by means of double arrows 253 in Fig. 3A. As shown in Fig. 3A, at least a part of the recessed shape 215 embeds the shrimp 2 at least during the exertion of said pressing force. In the shown example, the deforming elements 240, 241, 242 are adapted for resiliently pressing against the first and the second conveyor belts 211, 212. This is schematically illustrated in Fig. 3A in that the deforming elements 240, 241, 242 comprise helical springs 254 attached to the reference structure 252 and to a similar reference structure 251, respectively. Various other types of springs and various other means of realizing said resilient pressing are possible.

Also, various other modifications to the embodiment of Figs. 3A and 3B are possible. For instance, it is possible to interchange the positions of the squeezing element 214 and the deforming element 242. Also, instead of applying all three mentioned deforming elements 240, 241, 242, it is possible to omit an arbitrarily chosen single one or two arbitrarily chosen ones of these three deforming elements 240, 241, 242 from the apparatus. Such cases of omittance are also possible in case of the mentioned interchanging of positions of the squeezing element 214 and the deforming element 242.

## Claims

1. Apparatus for mechanized peeling of shrimp, wherein such a shrimp (2) is curved according to a substantially horseshoe-shape with a head (3) and a tail (4) at the respective free ends of the horseshoe-shape, with a back (5) facing away from the head and the tail, and with an underside and an opposing topside each extending along the horseshoe-shape, comprising:
- first contacting means (11; 211) for contacting the underside of the shrimp;
- second contacting means (12; 112; 212) for contacting the topside of the shrimp; and
- squeezing means (12, 14; 112, 114; 214) for realizing that via the first contacting means and the second contacting means there is exerted in a peeling zone of the apparatus (1; 101; 201) a pressing force onto a shrimp thus being situated inbetween the first and the second contacting means, which pressing force moves in a squeezing direction (21) extending from the head and the tail, both situated on one end of the curved shrimp, towards the back, so that the armature (6) of the shrimp opens on the backside and the meat (7) of the shrimp is squeezed out of the armature;
**characterized in that** one or each of the first and the second contacting means, at least when seen in at least one cross-section transverse to said squeezing direction (21), has a recessed shape (15) on its side facing towards the shrimp for embedding, with at least a part of that recessed shape, the shrimp at least during the exertion of said pressing force, and/or **characterized in that** the apparatus comprises deforming means (140; 240, 241, 242) for bringing one or each of the first and the second contacting means in an at least during the exertion of said pressing force occurring deformation state in which one or each of the first and the second contacting means, at least when seen in at least one cross-section transverse to said squeezing direction (21), has a recessed shape (115; 215) on its side facing towards the shrimp for embedding, with at least a part of that recessed shape, the shrimp.

2. Apparatus according to claim 1, comprising the said deforming means (240, 241, 242), and wherein the first contacting means comprise a first endless conveyor belt (211) and the second contacting means comprise a second endless conveyor belt (212), which conveyor belts are arranged for successively feeding the shrimps through the peeling zone in a transport direction (22) that intersects the squeezing direction (21), with the shrimps (2) lying and being retained inbetween trajectories, facing towards one another, of the respective conveyor belts (211, 212).

3. Apparatus according to claim 2, wherein the squeezing means comprise at least one squeezing element (214) situated in the peeling zone at a side of one or each of the first and/or the second conveyor belt (211, 212) facing away from the intervening area between the trajectories facing towards one another, for the exertion, via the first and/or the second conveyor belt, of said pressing force onto the shrimp (2) lying in said intervening area by means of pressing with a pressing area (230) of the squeezing element against the moving first and/or second conveyor belt.

4. Apparatus according to claim 3, wherein, for realizing of said pressing force moving in the squeezing direction (21), the pressing area (230) of the at least one squeezing element (214) has, on a side from which the shrimp (2) are fed, a bordering edge (231) of which at least a part is inclined relative to both the squeezing direction (21) and the transport direction (22).

5. Apparatus according to any one of claims 2-4, wherein said deforming means comprise at least one deforming element (240, 241, 242) which is adapted for moveably pressing against the first and/or the second conveyor belt (211, 212) for realizing of said deformation state.

6. Apparatus according to claim 5, wherein the at least one deforming element (240, 241, 242) is adapted for resiliently pressing against the first and/or the second conveyor belt (211, 212).

7. Apparatus according to any one of the preceding claims, further comprising at least one cutting station (50) for providing, prior to the exertion of said pressing force, an incision in the back (5) of a shrimp (2) to be peeled.

8. Apparatus according to any one of the preceding claims, further comprising positioning means which, prior to the exertion of said pressing force, position the shrimp (2) to be peeled onto the first contacting means (11; 211) in such manner that the backs (5) of the shrimp lie along a longitudinal edge of the first contacting means.

9. Apparatus according to any one of the preceding claims, wherein the first contacting means (11; 211) and/or the second contacting means (12; 112; 212) are adapted for making friction-increasing contact with the shrimp.

10. Method for mechanized peeling of shrimp, wherein such a shrimp (2) is curved according to a substantially horseshoe-shape with a head (3) and a tail (4) at the respective free ends of the horseshoe-shape, with a back (5) facing away from the head and the tail, and with an underside and an opposing topside each extending along the horseshoe-shape, and wherein:
first contacting means (11; 211) are brought in contact with the underside of the shrimp, second contacting means (12; 112; 212) are brought in contact with the topside of the shrimp, and by means of squeezing means (12, 14; 112, 114; 214) there is exerted in a peeling zone, via the first contacting means and the second contacting means, a pressing force onto a shrimp thus being situated inbetween the first and the second contacting means, which pressing force moves in a squeezing direction (21) extending from the head and the tail, both situated on one end of the curved shrimp, towards the back so that the armature (6) of the shrimp opens on the backside and the meat (7) of the shrimp is squeezed out of the armature,
**characterized in that** at least during the exertion of said pressing force one or each of the first and the second contacting means, at least when seen in at least one cross-section transverse to said squeezing direction (21), has a recessed shape (15; 115; 215) on its side facing towards the shrimp (2), wherein at least a part of that recessed shape embeds the shrimp at least during the exertion of said pressing force.

## Patentansprüche

1. Vorrichtung zur mechanisierten Schalenentfernung bei Garnelen, wobei so eine Garnele (2) in einer im Wesentlichen Hufeisenform gebogen ist, mit einem Kopf (3) und einem Schwanz (4) an den jeweiligen freien Enden der Hufeisenform, mit einem vom Kopf und Schwanz abgewandten Rücken (5) und mit einer Unterseite und einer entgegengesetzten Oberseite, die jeweils entlang der Hufeisenform verlaufen, umfassend:
- erste Berührungsmittel (11; 211) zur Berührung mit der Unterseite der Garnele;
- zweite Berührungsmittel (12; 112; 212) zur Berührung mit der Oberseite der Garnele; und
- Pressmittel (12; 14; 112, 114; 214), um zu bewirken, dass über die ersten Berührungsmittel und die zweiten Berührungsmittel in einem Schälbereich der Vorrichtung (1; 101; 201) eine Presskraft auf eine Garnele, die sich zwischen den ersten und zweiten Berührungsmitteln befindet, ausgeübt wird, welche Presskraft sich in einer Pressrichtung (21) bewegt, die vom Kopf und vom Schwanz, die beide an einem Ende der gebogenen Garnele angeordnet sind, zum Rücken verläuft, so dass die Schale (6) der Garnele sich am Rücken öffnet und das Fleisch (7) der Garnele aus der Schale gepresst wird;
**dadurch gekennzeichnet, dass** eines oder jedes der ersten und der zweiten Berührungsmittel, mindestens gesehen in mindestens einem Querschnitt quer zur Pressrichtung (21), eine vertiefte Form (15) auf der zur Garnele gerichteten Seite aufweist, um die Garnele mindestens während der Ausübung der Presskraft mit mindestens einem Teil dieser vertieften Form einzuschließen, und/oder **dadurch gekennzeichnet, dass** die Vorrichtung mindestens Verformungsmittel (140; 240, 241, 242) umfasst, um eines oder jedes der ersten und zweiten Berührungsmittel in einen mindestens während der Ausübung der Presskraft stattfindenden Verformungszustand zu bringen, in dem eines oder jedes der ersten und zweiten Berührungsmittel, mindestens gesehen in mindestens einem Querschnitt quer zu der Pressrichtung (21) auf der zu der Garnele gerichteten Seite eine vertiefte Form (115; 215) aufweist, um die Garnele mit mindestens einem Teil der vertieften Form einzuschließen.

2. Vorrichtung nach Anspruch 1, umfassend die Verformungsmittel (240, 241, 242), und wobei die ersten Berührungsmittel ein erstes Endlosförderband (211) und die zweiten Berührungsmittel ein zweites Endlosförderband (212) umfassen, die angeordnet sind, um nacheinander die Garnelen durch den Schälbereich in einer Transportrichtung (22), welche die Pressrichtung (21) schneidet, zuzuführen, wobei die Garnelen (2) zwischen den Transportwegen der entsprechenden Förderbänder (211, 212)) zueinander hin gerichtet liegen und gehalten werden.

3. Vorrichtung nach Anspruch 2, wobei die Pressmittel mindestens ein Presselement (214) umfassen, das im Schälbereich an einer Seite von einem oder mehreren des ersten und/oder des zweiten Förderbands (211, 212) angeordnet sind, abgewandt von dem zwischengeschalteten Bereich zwischen den zueinander gerichteten Transportwegen, um über das erste und/oder das zweite Förderband die Presskraft auf die Garnele (2), die in dem zwischengeschalteten Bereich liegt, auszuüben, indem mit einem Pressbereich (230 das Presselement gegen das sich bewegende erste und/oder zweite Förderband gedrückt wird.

4. Vorrichtung nach Anspruch 3, wobei zum Bewirken der sich in Pressrichtung (21) bewegenden Presskraft der Pressbereich (230) des mindestens einen Presselements (214) auf einer Seite, von der aus die Garnelen (2) zugeführt werden, eine angrenzende Kante (231) hat, von der mindestens ein Teil in Bezug auf sowohl die Pressrichtung (21) als auch die Transportrichtung (22) geneigt ist.

5. Vorrichtung nach einem der Ansprüche 2-4, wobei die Verformungsmittel mindestens ein Verformungselement (240, 241, 242) umfassen, das geeignet ist, um beweglich gegen das erste und/oder das zweite Förderband (211, 212) zu pressen und so den Verformungszustand zu bewirken.

6. Vorrichtung nach Anspruch 5, wobei das mindestens eine Verformungselement (240, 241, 241) geeignet ist, um elastisch gegen das erste und/oder das zweite Förderband (211, 212) zu pressen.

7. Vorrichtung nach einem der vorhergehenden Ansprüche, ferner umfassend mindestens eine Schneidestation (50), um vor dem Ausüben der Presskraft für einen Einschnitt im Rücken (5) einer zu schälenden Garnele (2) zu sorgen.

8. Vorrichtung nach einem der vorhergehenden Ansprüche, ferner umfassend Positioniermittel, die vor dem Ausüben der Presskraft die zu schälende Garnele (2) so auf den ersten Berührungsmitteln (11; 211) positionieren, dass die Rücken (5) der Garnele entlang einer Längskante der ersten Berührungsmittel liegen.

9. Vorrichtung nach einem der vorhergehenden Ansprüche, wobei die ersten Berührungsmittel (11; 211) und/oder die zweiten Berührungsmittel (12; 112; 212) geeignet sind, eine reibungssteigernde Berührung mit der Garnele herzustellen.

10. Verfahren zur mechanisierten Schalenentfernung bei Garnelen, wobei so eine Garnele (2) in einer im Wesentlichen Hufeisenform gebogen ist, mit einem Kopf (3) und einem Schwanz (4) an den jeweiligen freien Enden der Hufeisenform, mit einem vom Kopf und Schwanz abgewandten Rücken (5) und mit einer Unterseite und einer entgegengesetzten Oberseite, die jeweils entlang der Hufeisenform verlaufen, und wobei:
die ersten Berührungsmittel (11; 211) mit der Unterseite der Garnele in Berührung gebracht werden, die zweiten Berührungsmittel (12; 112; 212) mit der Oberseite der Garnele in Berührung gebracht werden, und durch Pressmittel (12, 14; 112; 114; 214) in einem Schälbereich über die ersten Berührungsmittel und die zweiten Berührungsmittel eine Presskraft auf eine zwischen den ersten und den zweiten Berührungsmitteln befindliche Garnele ausgeübt wird, wobei die Presskraft sich in einer Pressrichtung (21) bewegt, die vom Kopf und vom Schwanz, beide an einem Ende der gebogenen Garnele angeordnet, verläuft, so dass die Schale (6) der Garnele sich auf der Rückseite öffnet und das Fleisch (7) der Garnele aus der Schale gepresst wird,
**dadurch gekennzeichnet, dass** mindestens beim Ausüben der Presskraft mindestens eines oder jedes der ersten und der zweiten Berührungsmittel, mindestens gesehen in mindestens einem Querschnitt quer zur Pressrichtung (21), eine vertiefte Form (15; 115; 215) auf der zur Garnele (2) gewandten Seite aufweist, wobei mindestens ein Teil der vertieften Form die Garnele während mindestens der Ausübung der Presskraft einschließt.

## Revendications

1. Appareil destiné à décortiquer de manière mécanique une crevette, dans lequel la crevette (2) est incurvée selon une forme sensiblement en fer à cheval avec une tête (3) et une queue (4) au niveau des extrémités libres respectives de la forme en fer à cheval, avec un dos (5) qui fait face en s'éloignant de la tête et de la queue, et avec une face inférieure et une face supérieure opposée, chacune d'elles s'étendant le long de la forme en fer à cheval, comprenant :
- des premiers moyens de contact (11 ; 211) pour venir en contact avec la face inférieure de la crevette ;
- des seconds moyens de contact (12 ; 112 ; 212) pour venir en contact avec la face supérieure de la crevette ; et
- des moyens de pression (12, 14 ; 112, 114 ; 214) pour exercer, par l'intermédiaire des premiers moyens de contact et des seconds moyens de contact, une force de pression dans une zone de décorticage de l'appareil (1 ; 101 ; 201) sur une crevette située ainsi entre les premiers et les seconds moyens de contact, laquelle force de pression se déplace dans une direction de pression (21) qui s'étend à partir de la tête et de la queue, toutes deux étant situées sur une extrémité de la crevette incurvée, vers le dos, de telle sorte que la carapace (6) de la crevette s'ouvre sur le côté arrière et que la chair (7) de la crevette soit pressée hors de la carapace ;
**caractérisé en ce que** un ou chacun des premiers et des seconds moyens de contact, vus au moins en section transversale transversale par rapport à ladite direction de pression (21), présentent une forme en retrait (15) sur leur côté faisant face à la crevette afin de recevoir la crevette, grâce à une partie au moins de cette forme en retrait, au moins lorsque ladite force de pression est exercée, et/ou **caractérisé en ce que** l'appareil comprend des moyens de déformation (140 ; 240, 241, 242) pour amener un ou chacun des premiers et des seconds moyens de contact dans un état de déformation, au moins lorsque ladite force de pression est exercée, dans lequel un ou chacun des premiers et des seconds moyens de contact, vus au moins en section transversale transversale par rapport à ladite direction de pression (21), présentent une forme en retrait (115 ; 215) sur leur côté faisant face à la crevette afin de recevoir la crevette, grâce à une partie au moins de cette forme en retrait.

2. Appareil selon la revendication 1, comprenant lesdits moyens de déformation (240, 241, 242), et dans lequel les premiers moyens de contact comprennent une première bande transporteuse sans fin (211) et les seconds moyens de contact comprennent une seconde bande transporteuse sans fin (212), lesquelles bandes transporteuses sont agencées pour fournir à la suite les crevettes à la zone de décorticage dans une direction de transport (22) qui croise la direction de pression (21), les crevettes (2) situées et se trouvant maintenues entre les trajectoires, qui se font face l'une à l'autre, des bandes transporteuses respectives (211, 212).

3. Appareil selon la revendication 2, dans lequel les moyens de pression comprennent au moins un élément de pression (214) situé dans la zone de décorticage au niveau d'un côté de l'une ou de chacune de la première et/ou de la seconde bande transporteuse (211, 212) qui fait face en s'éloignant de la zone d'intervention située entre les trajectoires se faisant face l'une à l'autre, de façon à exercer, par l'intermédiaire de la première et/ou de la seconde bande transporteuse, ladite force de pression sur la crevette (2) qui se situe dans ladite zone d'intervention au moyen d'une pression avec une zone de pression (230) de l'élément de pression contre la première et/ou la seconde bande transporteuse mobile.

4. Appareil selon la revendication 3, dans lequel la zone de pression (230) du le au moins un élément de pression (214) présente, pour obtenir ladite force de pression qui se déplace dans la direction de pression (21), sur un côté à partir duquel les crevettes (2) sont fournies, un bord limitrophe (231) dont une partie au moins est inclinée par rapport à la direction de pression (21) et à la direction de transport (22).

5. Appareil selon l'une quelconque des revendications 2 à 4, dans lequel lesdits moyens de déformation comprennent au moins un élément de déformation (240, 241, 242) qui est adapté pour presser de manière mobile contre la première et/ou la seconde bande transporteuse (211, 212) afin d'obtenir ledit état de déformation.

6. Appareil selon la revendication 5, dans lequel le au moins un élément de déformation (240, 241, 242) est adapté pour presser de manière élastique contre la première et/ou la seconde bande transporteuse (211, 212).

7. Appareil selon l'une quelconque des revendications précédentes, comprenant en outre un poste de coupe (50) au moins destiné à pratiquer, avant que ladite force de pression ne soit exercée, une incision dans le dos (5) d'une crevette (2) à décortiquer.

8. Appareil selon l'une quelconque des revendications précédentes, comprenant en outre des moyens de positionnement qui, avant que ladite force de pression ne soit exercée, positionnent les crevettes (2) à décortiquer sur les premiers moyens de contact (11 ; 211) de telle façon que les dos (5) des crevettes se situent le long d'un bord longitudinal des premiers moyens de contact.

9. Appareil selon l'une quelconque des revendications précédentes, dans lequel les premiers moyens de contact (11 ; 211) et/ou les seconds moyens de contact (12 ; 112 ; 212) sont adaptés pour établir un contact à frottement croissant avec la crevette.

10. Procédé destiné à décortiquer de manière mécanique une crevette, dans lequel la crevette (2) est incurvée selon une forme sensiblement en fer à cheval avec une tête (3) et une queue (4) au niveau des extrémités libres respectives de la forme en fer à cheval, avec un dos (5) qui fait face en s'éloignant de la tête et de la queue, et avec une face inférieure et une face supérieure opposée, chacune d'elles s'étendant le long de la forme en fer à cheval, et dans lequel :
les premiers moyens de contact (11 ; 211) sont mis en contact avec le côté inférieur de la crevette, les seconds moyens de contact (12 ; 112 ; 212) sont mis en contact avec le côté supérieur de la crevette, et grâce à des moyens de pression (12, 14 ; 112, 114 ; 214), il est exercé dans une zone de décorticage, par l'intermédiaire des premiers moyens de contact et des seconds moyens de contact, une force de pression sur une crevette qui se situe ainsi entre les premiers et les seconds moyens de contact, laquelle force de pression se déplace dans une direction de pression (21) qui s'étend à partir de la tête et de la queue, toutes deux étant situées sur une extrémité de la crevette incurvée, vers le dos, de telle sorte que la carapace (6) de la crevette s'ouvre sur le côté arrière et que la chair (7) de la crevette soit pressée hors de la carapace ;
**caractérisé en ce que**, au moins lorsque ladite force de pression est exercée, un ou chacun des premiers et des seconds moyens de contact, vus au moins en section transversale transversale par rapport à ladite direction de pression (21), présentent une forme en retrait (15 ; 115 ; 215) sur leur côté faisant face à la crevette (2), dans lequel une partie au moins de cette forme en retrait reçoit la crevette au moins lorsque ladite force de pression est exercée.
